# EUROPEAN PATENT APPLICATION

(11) **EP 1 739 591 A2**
(43) Date of publication of application: **03.01.2007**
(21) Application number: 06016244.3
(22) Date of filing: 22.01.2002
(51) Int. Cl.: G06F 21/22

(54) **Code distributing method**

(30) Priority: 30.05.2001 JP 2001162271
(62) Divisional of application: 02250415.3
(71) Applicant: Fujitsu Ltd., Kawasaki-shi, Kanagawa 211-8588 (JP)
(72) Inventor: Kamada, Jun c/o FUJITSU LIMITED, Kawasaki-shi, Kanagawa 211-8588 (JP); Kotani, Seigo c/o FUJITSU LIMITED, Kawasaki-shi, Kanagawa 211-8588 (JP)
(74) Representative: Stebbing, Timothy Charles

(57) **Abstract**

A method for distributing code to a user in which a code generator (101) provides a code authentication organization (102) with code. The code authentication organization (102) adds verifying information after confirming the validity of the received code, and provides authenticated code to a code user (103). The code user (103), for example, a multiprocessor system, confirms the validity of the code according to the verifying information added to the received code, and then uses the code. The code authentication organization (102) presents the fee to the code generator (101), collects a code, and pays the fee when the code is collected. Then, the code authentication organization (102) presents a code fee to the code user (103), adds the verifying information, provides the code for the code use (103), and simultaneously collects the fee.

## Description

The present invention relates to an apparatus for executing executable code such as an encoded program, etc., and a method for distributing such executable code. **Such code (which may contain manyindividual instructions or functions) will be referred to as "a code" below.**

An environment in which only an authenticated code is operated can be realized by executing an executable code (hereinafter referred to simply as a code), which contains an electronic signature and is encrypted. An executable code includes a part or all of an encoded program. A method for realizing such an environment can be that of assuming a processor (secure processor) having the function of verifying a signature and the function of decrypting data as a memory-mapped input/output device (I/O device). In this method, an encrypted code is transmitted as data to the I/O device, executes the code, and obtains an execution result.

However, there is the following problem with the conventional code executing method.

In this code executing method, a large code cannot be entirely passed at a time because the memory capacity of an I/O device is limited. In addition, if execution is started with a code first passed, other controlling processes cannot be performed until the execution is completed. Therefore, a signature verifying process, a secure decrypting process, etc. cannot be performed in a multitasking mode. As a result, a plurality of tasks accompanied by a secure process cannot be efficiently performed.

The latter problem can be solved by designing an I/O device such that a multitasking operation can be performed, and providing a task management module exclusively for the I/O device in the operating system (OS). However, the OS is provided with both the task management module exclusive for an I/O device (secure processor) and a task management module for a normal processor, which is not desirable for the efficiency.

Furthermore, from the viewpoint of security, it is desired that the OS itself is operated in a secure processor, but the existing OS cannot be easily rewritten for use with the secure processor.

The present invention aims at providing an apparatus for efficiently executing encrypted code containing an electronic signature without greatly changing the existing OS, and a method for distributing code to the apparatus.

The code execution apparatus according to the present invention is realized through a multiprocessor system, and includes a secure memory, a secure processor, a normal memory, a normal processor, and a controller.

The secure memory stores the encrypted code of a secure task, and verifying information for verifying the validity of the encrypted code. The secure processor executes the encrypted code if the verifying information verifies the validity of the encrypted code. The normal memory stores code of the normal task, and the normal processor executes the code of the normal task.

The controller allocates the secure task and the normal task, stores the encrypted code in the secure memory, and stores the code of the normal task in the normal memory.

A code distributing method for the code execution apparatus can be any of the following two methods.
(1) A code generator provides executable code to a code authentication organization, and the code authentication organization adds to the code the verifying information for verification of the validity of the code, and distributes the code to the user of the code execution apparatus.
(2) A code generator provides executable code to a code authentication organization, and pays a commission while the code authentication organization adds the verifying information to the code. Then, the code generator distributes the code to the user of the code execution apparatus, and receives the fee paid by the user.

**Reference is made, by way of example, to the accompanying drawings in which:**
FIG. 1 shows the principle of the code execution apparatus according to the present invention;
FIG. 2 shows the configuration of the first multiprocessor system;
FIG. 3 shows the first configuration of the secure memory and the secure processor;
FIG. 4 shows the configuration of the secure processor;
FIG. 5 shows the configuration of the secure OS;
FIG. 6 is a flowchart of the process of the secure task management;
FIG. 7 is a flowchart of the process of the secure memory management;
FIG. 8 is a flowchart of the real memory releasing process;
FIG. 9 is a flowchart of the process of the secure file system;
FIG. 10 shows the second configuration of the secure memory and the secure processor;
FIG. 11 shows the configuration of the secure drive/medium and the secure memory;
FIG. 12 shows the configuration of the second multiprocessor system;
FIG. 13 shows the configuration of the third multiprocessor system;
FIG. 14 is a flowchart of the circuit generating process;
FIG. 15 shows an array of the basic circuit;
FIG. 16 shows a group of arithmetic units;
FIG. 17 shows the first code distributing method;
FIG. 18 shows the first fee payment;
FIG. 19 shows the second code distributing method;
FIG. 20 shows the third code distributing method;
FIG. 21 shows the second fee payment;
FIG. 22 shows the fourth code distributing method; and
FIG. 23 shows storage media.

The embodiments of the present invention are described below in detail by referring to the attached drawings.

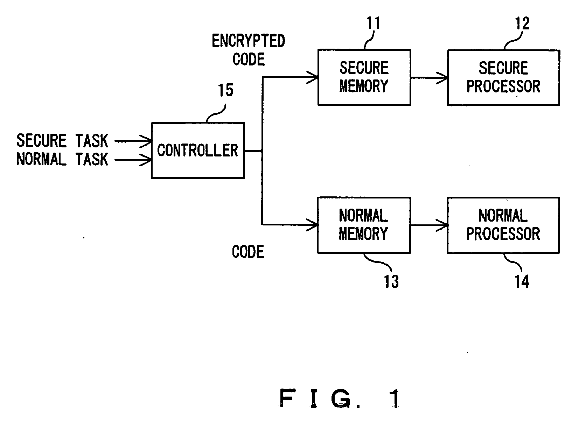

FIG. 1 shows the principle of the code execution apparatus according to the present invention. The code execution apparatus shown in FIG. 1 is realized through a multiprocessor system, and comprises a secure memory 11, a secure processor 12, a normal memory 13, a normal processor 14, and a controller 15.

The secure memory 11 stores an encrypted code of a secure task, and verifying information for verification of the validity of the encrypted code. The secure processor 12 executes an encrypted code when the verifying information verifies the validity of the encrypted code. The normal memory 13 stores the code of a normal task, and the normal processor 14 executes the code of a normal task.

The controller 15 allocates a secure task and a normal task, and stores an encrypted code in the secure memory 11, and stores the code of a normal task in the normal memory 13.

Verifying information can be, for example, an electronic signature, a parity code, a CRC (cyclic redundancy check) bit, etc. The controller 15 corresponds to, for example, the OS of a multiprocessor system.

When a secure task is executed, the controller 15 stores the encrypted code and the verifying information in the secure memory 11. If the validity of the encrypted code is verified according to the verifying information, the secure processor 12 executes the encrypted code.

When the normal task is executed, the controller 15 stores the code in the normal memory 13, and the normal processor 14 executes the code.

Thus, the task management can be easily performed by allowing a secure task and a normal task to co-exist in the multiprocessor system, and by the controller 15 allocating the tasks to the secure processor 12 and the normal processor 14. Therefore, the code of a secure task can be efficiently performed without greatly changing the OS.

There can be two methods of distributing a code to the multiprocessor system as follows.
(1) A code generator provides an executable code for a code authentication organization, and the code authentication organization adds to the code the verifying information for verification of the validity of the code, and distributes it to a user of the multiprocessor system.
(2) A code generator provides an executable code for a code authentication organization, and pays a commission while the code authentication organization adds the verifying information to the code. Then, the code generator distributes the code to a user of the multiprocessor system, and receives the fee paid by the user.

According to the present embodiment, a processor in the multiprocessor system is replaced with a secure processor, thereby generating a heterogeneous multiprocessor. Then, the OS controls the allocation of a secure task and an unsecured task to each processor. Thus, by generating a heterogeneous multiprocessor including a secure processor, the OS does not need to have double task management modules.

Furthermore, by allowing a secure task and an unsecured task to co-exist, a migration can be realized such that the tasks are changed to secure tasks step by step from a possible one, thereby finally securing the entire tasks of the OS. Although such a migration is limited to the case where the OS is realized as a set of small tasks, it is not necessary to rewrite an existing OS directly for a secure processor in the migration.

However, in the above mentioned system, a secure processor fetches and executes an encrypted code in units of an instruction. Therefore, an entire code cannot be collectively passed to the secure processor, and if a signature is added to the entire encrypted code, the signature cannot be verified. In the present embodiment, an encrypted code is generated by assigning a signature in units of a page (for example, every 4K bytes, etc.), which is the minimum unit for memory allocation, and the memory itself verifies the signature when the memory allocation is performed.

Then, an organization for collecting the codes to be distributed to the system, and assigning signatures to the collected codes is provided. The code generator can widely distribute code, and the user can safely use the codes.

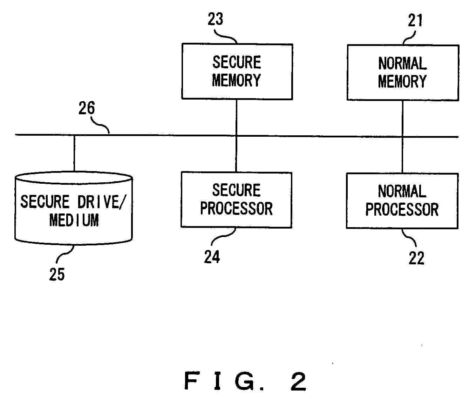

FIG. 2 shows the configuration of the multiprocessor system. The system shown in FIG. 2 comprises a normal memory 21, a normal processor 22, a secure memory 23, a secure processor 24, and a secure drive/medium 25. These units are interconnected through a system bus 26, but the normal processor 22 does not fetch an instruction from the secure memory 23, and the secure processor 24 does not fetch an instruction from the normal memory 21.

The normal processor 22 executes a normal code of a normal task (unsecured task) using the normal memory 21, and the secure processor 24 executes an encrypted code of a secure task using the secure memory 23. The secure drive/medium 25 is a storage device for storing an encrypted code for a secure task. In FIG. 2, a normal processor 22 and a secure processor 24 are provided, but a plurality of normal and secure processors can also be provided.

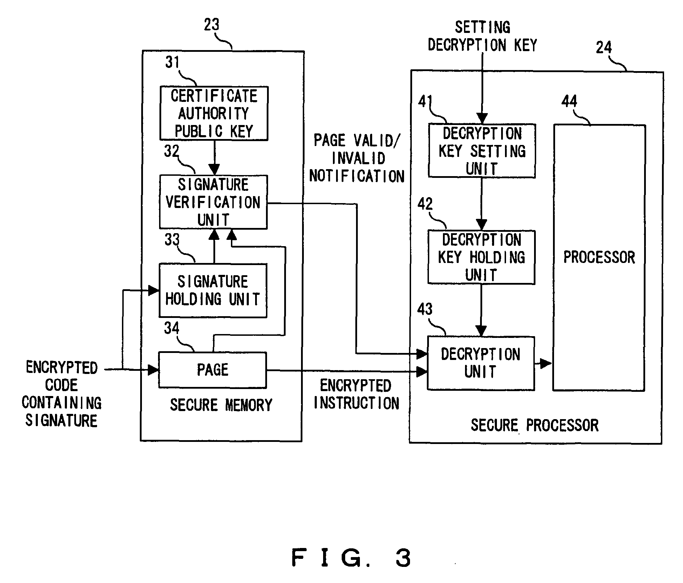

FIG. 3 shows an example of the configuration of the secure memory 23 and the secure processor 24. The secure memory 23 shown in FIG. 3 comprises a certificate authority public key 31, a signature verification unit 32, a signature holding unit 33, and a page 34. The page 34 is the minimum unit for allocation of physical memory (real memory), and has the capacity of, for example, 4 Kbytes. The signature holding unit 33 has an area storing signature data for each page. The signature verification unit 32 is installed through, for example, hardware or an MPU (micro processing unit), and an encrypted code is verified in units of a page using a signature.

The signature corresponds to, for example, an X. 509 certificate which is generated by a secret key of a certificate authority (CA) and can be verified by a public key of the CA stored in advance in the secure memory 23.

The secure processor 24 comprises a decryption key setting unit 41, a decryption key holding unit 42, a decryption unit 43, and a processor 44. Among these units, the decryption key setting unit 41, the decryption key holding unit 42, and the decryption unit 43 are provided in front of an instruction input unit of the processor 44 for executing an instruction, and the decryption unit 43 is implemented through, for example, hardware or an MPU.

An encrypted code containing a signature is read by the secure drive/medium 25, divided into a signature and an encrypted code, which are respectively stored in the signature holding unit 33 and the page 34.

When they are stored, the signature verification unit 32 verifies the signature using the public key of the certificate authority which generated the signature. If there is no problem, the hash value of the encrypted code contained in the signature is compared with the hash value computed again from the encrypted code on the page 34.

If these hash values match each other, and it is checked that the encrypted code has not been forged, then the secure processor 24 is notified that the encrypted code on the page 34 is valid (valid code). If the hash values do not match each other, then the secure processor 24 is notified that the encrypted code on the page 34 is invalid (invalid code).

Upon receipt of a validity notification, the decryption unit 43 of the secure processor 24 fetches a necessary encrypted instruction at the memory address on the page 34, and sequentially decrypts encrypted instructions using the decryption key of the decryption key holding unit 42. Then, the processor 44 sequentially executes the decrypted instructions. The decryption key required to decrypt instructions is set in the decryption key holding unit 42 in advance.

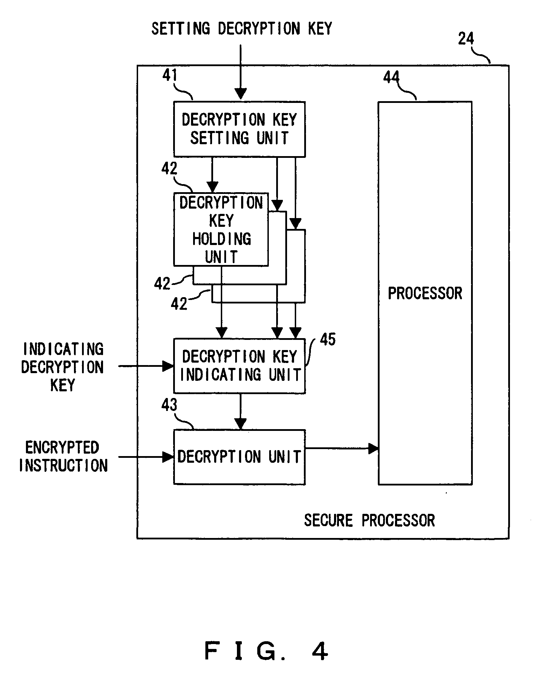

Furthermore, a plurality of decryption keys can be stored in the secure processor 24 to externally specify which decryption key is to be used in decrypting an instruction. FIG. 4 shows the configuration of the secure processor 24.

The secure processor 24 shown in FIG. 4 is different from the secure processor 24 shown in FIG. 3 in that a plurality of decryption key holding units 42 are provided, and a decryption key indicating unit 45 indicating which of a plurality of decryption keys stored in these decryption key holding units 42 is to be used is added. The decryption key indicating unit 45 can be implemented through, for example, hardware or an MPU. The OS instructs the decryption key indicating unit 45 which decryption key is to be used depending on the secure task being executed.

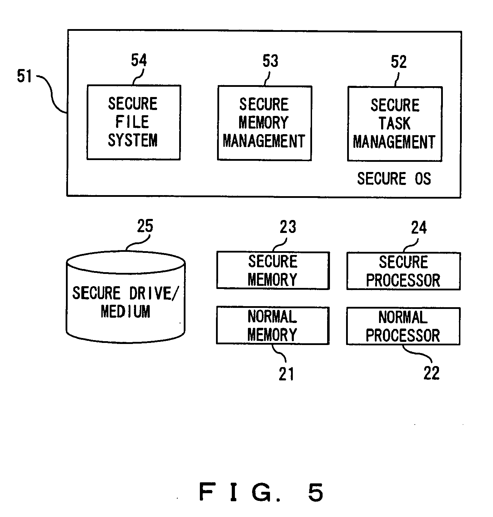

FIG. 5 shows the configuration of the secure OS for controlling the operation of the multiprocessor system shown in FIG. 2. A secure OS 51 shown in FIG. 5 is operated in the secure processor 24 and/or the normal processor 22, and comprises a secure task management 52, a secure memory management 53, and a secure file system 54.

The secure task management 52 and the secure memory management 53 allocate secure tasks and unsecured tasks. Therefore, the encrypted codes of the secure tasks are stored in the secure memory 23, and the codes of the unsecured tasks are stored in the normal memory 21. The secure task management 52 controls the multitask processes of both secure tasks and unsecured tasks. Described below is the operation performed when a target task is a secure task.

The secure task management 52 manages the context of a plurality of tasks. When the context is switched, it performs normal processes such as changing the program counter of the secure processor 24, etc., and specifies which of the decryption keys held in the secure processor 24 is to be used.

The secure memory management 53 allocates the secure memory 23 to a secure task as necessary. An encrypted instruction is transferred from the secure memory 23 to the secure processor 24 without passing through the secure memory management 53 because this is a fetching operation of the CPU (central processing unit).

The secure file system 54 manages files of encrypted codes stored in the secure drive/medium 25. At a request of the secure memory management 53, an encrypted code is read from the secure drive/medium 25 and passed to the secure memory management 53 by the secure file system 54.

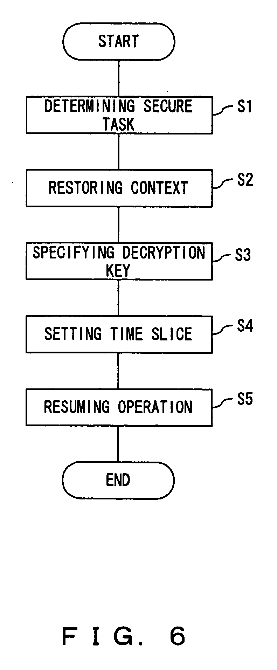

The processes of the secure task management 52, the secure memory management 53, and the secure file system 54 are described in detail by referring to FIGS. 6 through 9.

FIG. 6 is a flowchart of the process of the secure task management 52. The process shown in FIG. 6 is started when the time slice of the secure task being performed in the secure processor 24 is up, a timer interruption occurs, and control is passed to the secure task management 52.

The secure task management 52 first determines a secure task A to be executed next according to the scheduling algorithm (step S1), and restores the context of the secure task A (step S2). At this time, the program counter and the stack pointer of the secure processor 24 are restored, and the TLB (translation look-aside buffer) in the MMU (memory management unit) existing between the secure processor 24 and the secure memory 23 is restored, etc.

Then, the secure processor 24 is instructed to use a program decryption key for a secure task A (step S3) . The time slice (for example, 100 ms) of the secure task A is set on the timer (step S4), and the operation of the secure processor 24 is resumed (step S5).

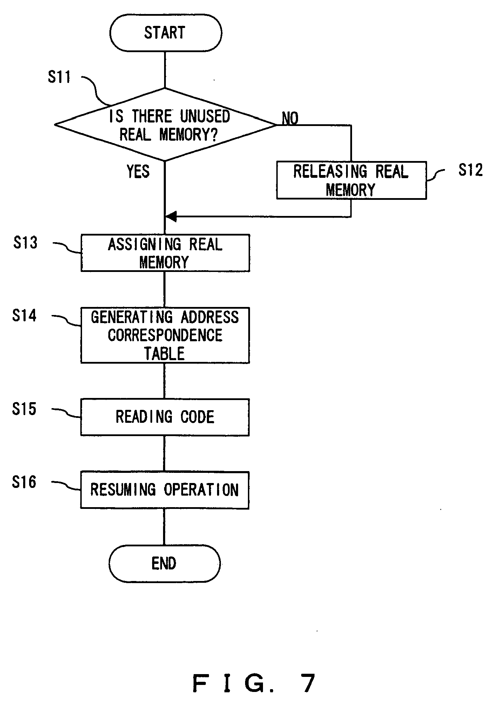

FIG. 7 is a flowchart of the process of the secure memory management 53. The process shown in FIG. 7 is started when a page fault occurs during the execution of a secure task, an interruption occurs, and control is passed to the secure memory management 53.

The secure memory management 53 first checks whether or not an unused real memory area exists in the secure memory 23 (step S11). If there is a real memory area, one page is allocated (step S13). If there is no unused real memory area, a subroutine of performing a memory releasing process is invoked (step S12), a space is reserved, and a real memory area is allocated.

Then, a correspondence table between an allocated real memory address and a virtual address is generated, and stored in the TLB in the MMU (step S14). A request for a code for assignment in the allocated real memory is issued to the secure file system 54, a received code is assigned to the real memory (step S15), and the operation of the secure processor 24 is resumed (step S16).

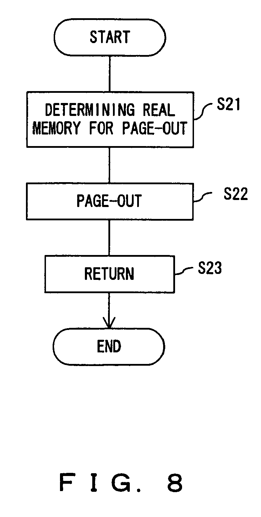

FIG. 8 is a flowchart of the real memory releasing process performed by the subroutine invoked in step S12 shown in FIG. 7. The subroutine first determines the target real memory area for page-out according to the real memory releasing algorithm (step S21). Then, the code in the target real memory area is paged out (written) to the secure drive/medium 25 (step S22). Then, control is returned to the calling program (step S23).

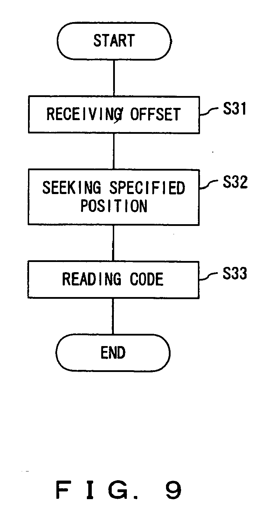

FIG. 9 is a flowchart of the process of the secure file system 54. The process in FIG. 9 is started when a request for a code is issued by the secure memory management 53 in step S15 shown in FIG. 7.

The secure file system 54 first receives the offset from the beginning of a target program (step S31), and seeks up to the specified position in the secure drive/medium 25 (step S32). Then, a code of 1 page is read from the specified position, and passed to the secure memory management 53 (step S33).

It is also possible to safely communicate an encrypted code by the secure memory 23 and the secure processor 24 authenticating each other to share a session key. In this case, the secure memory 23 further encrypts the encrypted code using a session key, and transfers it to the secure processor 24.

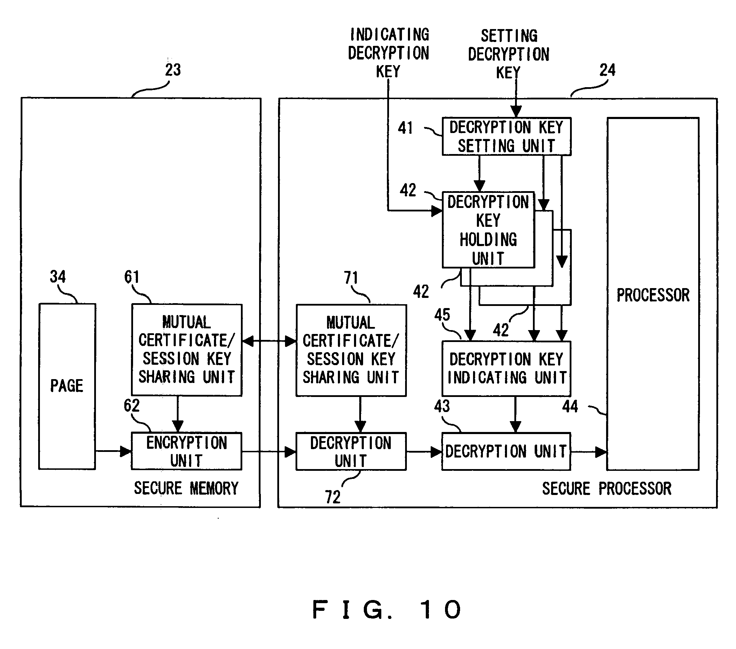

FIG. 10 shows the configuration of such a secure memory 23 and a secure processor 24. The secure memory 23 shown in FIG. 10 further comprises a mutual certificate/session key sharing unit 61 and an encryption unit 62 in addition to the configuration shown in FIG. 3, and the secure processor 24 further comprises a mutual certificate/session key sharing unit 71 and a decryption unit 72 in addition to the configuration shown in FIG. 4.

First, the mutual certificate/session key sharing unit 61 and the mutual certificate/session key sharing unit 71 authenticate each other as a mutually reliable party, and generate and share a session key. The method of authenticating each other can be either a method based on a certificate using a public key, or a method using a common key. A session key is generated using, for example, a random number.

Then, the encryption unit 62 of the secure memory 23 further encrypts the encrypted instruction on the page 34 using a session key, and transfers it to the secure processor 24. The decryption unit 72 of the secure processor 24 decrypts the received encrypted instruction using a session key, and passes it to the decryption unit 43. Then, as shown in FIG. 4, the encrypted instruction is decrypted by a corresponding decryption key, and is then executed.

Similarly, the secure drive/medium 25 and the secure memory 23 authenticate each other to share a session key, thereby safely communicating an encrypted code.

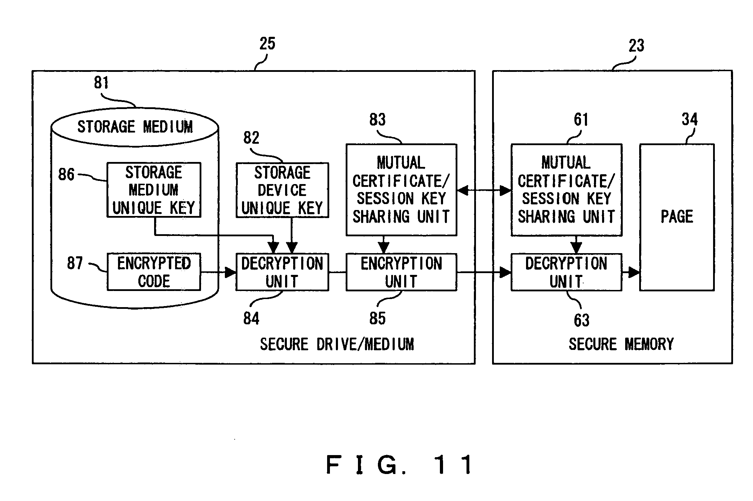

FIG. 11 shows the configuration of such a secure drive/medium 25 and a secure memory 23. The secure drive/medium 25 shown in FIG. 11 comprises a storage medium 81, a storage device unique key 82, a mutual certificate/session key sharing unit 83, a decryption unit 84, and an encryption unit 85. The secure memory 23 further comprises a decryption unit 63 in addition to the configuration shown in FIG. 10.

The secure drive/medium 25 further encrypts the encrypted code using the storage device unique key 82 or the storage medium unique key 86, and stores it in the storage medium 81. The storage medium 81 can be a magnetic disk, an optical disk, a magneto-optical disk, a magnetic tape, etc. The storage device unique key 82 is a key unique to the secure drive/medium 25, and a storage medium unique key 86 is a key unique to the storage medium 81.

As in the case shown in FIG. 10, the mutual certificate/session key sharing unit 83 and the mutual certificate/session key sharing unit 61 first authenticate each other as a mutually reliable party, and then generate and share a session key.

The decryption unit 84 of the secure drive/medium 25 decrypts a encrypted code 87 stored in the storage medium 81 using the storage device unique key 82 or the storage medium unique key 86, and passes it to the encryption unit 85. The encryption unit 85 further encrypts the encrypted code using a session key held in the mutual certificate/session key sharing unit 83, and transfers it to the secure memory 23. The decryption unit 63 of the secure memory 23 decrypts the received encrypted code using a session key, returns it to the original encrypted code, and stores it on the page 34.

At this time, the secure file system 54 shown in FIG. 5 provides the interface between the secure drive/medium 25 and the secure memory 23 for the share of a session key. Then, the secure file system 54 reads the encrypted code encrypted by the session key from the secure drive/medium 25 according to the logical format of the storage medium 81, and transfers the code to the secure memory 23.

Described below is the flow of the process when a secure task is performed. In this case, it is assumed that only one page of the current secure memory is assigned to the secure task and that a program counter points to the last encrypted instruction of the encrypted code on the page. The mutually authenticating process among the entities (the secure memory 23, the secure processor 24, and the secure drive/medium 25), the session key sharing process, and the encrypting/decrypting process using a session key are omitted here.
(1) The secure processor 24 fetches an encrypted code from the secure memory 23, decrypts it, and then executes it.
(2) The secure processor 24 increments the program counter, and fetches the next instruction.
(3) Since the real memory has not been assigned, the secure memory 23 generates a page fault exception for the secure task management 52.
(4) After setting the secure task being performed in the sleeping state, the secure task management 52 requests the secure memory management 53 to assign a new real memory area.
(5) The secure memory management 53 assigns one page of new real memory area to the secure task.
(6) The secure task management 52 requests the secure file system 54 to read the subsequent encrypted code.
(7) The secure file system 54 reads the subsequent encrypted code from the secure drive/medium 25 and stores it in the newly assigned real memory area.
(8) The secure task management 52 sets the secure task in the sleeping state to the running state.
(9) The secure processor 24 fetches and executes the subsequent instruction on the newly assigned page.

Described below is the flow of the process performed when two secure tasks A and B are executed. In this case, it is assumed that the secure tasks A and B are assigned sufficient secure memory areas and no page fault occurs.
(1) The secure processor 24 fetches and executes the encrypted instruction of the secure task A.
(2) The secure task management 52 sets the secure task A in the sleeping state because the time slice is up and a timer interruption occurs.
(3) The secure task management 52 determines the task to be operated next as a secure task B according to the scheduling algorithm, and sets the secure task B in the operating state.
(4) The secure task management 52 indicates a key required to decrypt the secure task B for the secure processor 24.
(5) The secure task management 52 sets the program counter, the stack pointer, the address correspondence table of the TLB, etc. for the secure task B.
(6) The secure processor 24 fetches and executes the encrypted instruction of the secure task B.

The above explanation can be easily understood by assuming that the secure OS is operating in the secure processor 24. However, if the function of temporarily stopping the execution of the secure processor 24, the function of switching the context by, for example, changing the program counter of the secure processor 24, etc. are provided for the secure processor 24, then the secure OS itself can operate in the normal processor 22.

In the multiprocessor system shown in FIG. 2, the secure memory 23 and the normal memory 21 are separately provided, but all or a part of the secure memory 23 and the normal memory 21 can be overlapped.

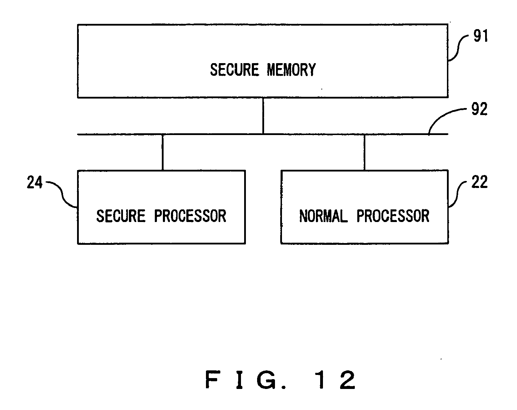

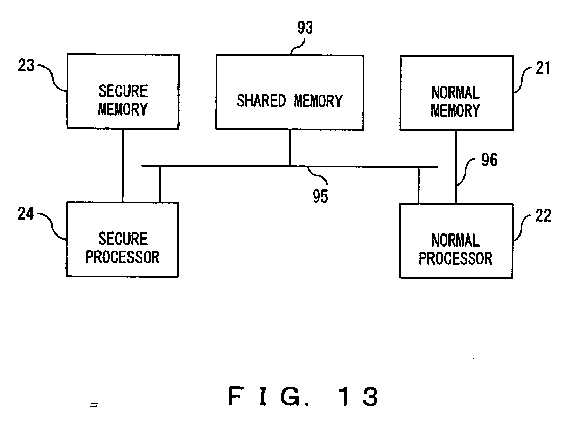

FIGS. 12 and 13 show examples of the configuration of such a multiprocessor system. However, the secure drive/medium 25 is omitted in these examples. In FIG. 12, the secure processor 24 and the normal processor 22 are connected to secure memory 91 through the same system bus 92 (data bus, address bus). In this case, the secure memory 91 has the functions of the secure memory 23 and the normal memory 21.

In FIG. 13, the secure processor 24 is connected to the secure memory 23 through a system bus 94, and connected to a shared memory 93 through a system bus 95. The normal processor 22 is connected to the normal memory 21 through a system bus 96, but connected to the shared memory 93 through the system bus 95. The shared memory 93 is shared between the secure processor 24 and the normal processor 22, and has the functions of the secure memory 23 or/and the normal memory 21.

Since the configuration shown in FIG. 12 includes one system bus and one memory unit, it is less costly than the configuration shown in FIG. 13. However, since the secure processor 24 and the normal processor 22 can access the secure memory 91, the configuration shown in FIG. 12 has a lower security level than the configuration shown in FIG. 13. On the other hand, the cost of the configuration shown in FIG. 13 exceeds that shown in FIG. 12, but the security level of the configuration shown in FIG. 13 is higher than that shown in FIG. 12.

According to the above mentioned embodiments, the secure processor 24 fetches and executes the code, but a logical circuit for fetching, decrypting, and executing an encrypted instruction can be automatically generated using all or a part of the code. In this case, a device for fixing a general purpose logical circuit in a specific circuit state can be provided in the system.

After verifying that the secure memory 23 is a valid code, the secure processor 24 fixes all or a part of the logical circuit in a circuit state in a nonvolatile manner using the code. At this time, the precedent circuit state is deleted, and newly overwritten.

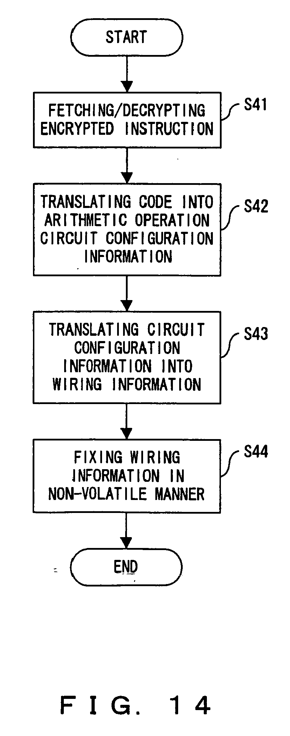

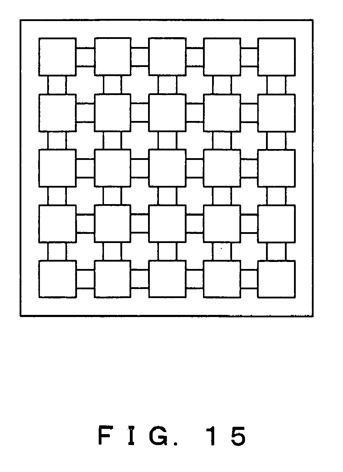

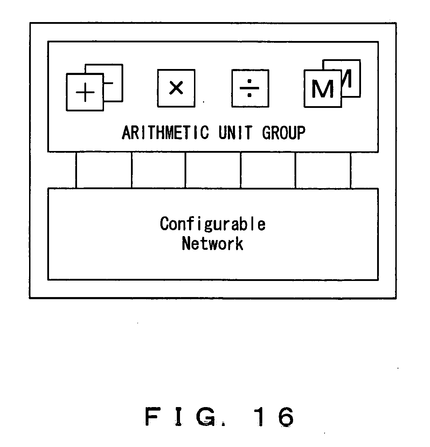

FIG. 14 is a flowchart of the circuit generating process. The secure processor 24 first fetches and decrypts an encrypted instruction (step S41), and translates the code into arithmetic operation circuit configuration information (step S42). Next, the circuit configuration information is translated into wiring information (step S43), thereby fixing the wiring information in a volatile manner (step S44). There can be the following two methods for fixing wiring information.
(1) As shown in FIG. 15, a plurality of basic circuits are arranged in an array, and the circuits are connected with each other in a nonvolatile manner according to the wiring information, thereby configuring an arithmetic unit.
(2) As shown in FIG. 16, various types of configured basic arithmetic units are prepared, and necessary arithmetic units are connected with each other in a nonvolatile manner according to wiring information.

Thus, the process speed can be increased by preparing processing portions by hardware. Furthermore, when hardware and software processes are used in combination, encrypted instructions can be designed in a hierarchical structure to improve the security level. For example, an instruction for a specifically important portion can be realized as hardware through a strict authenticating step, and other instructions are processed by software in a simple authenticating process for convenience of a user.

In the above mentioned embodiments, it is checked using a signature whether or not a code is valid. As the information for verification of the validity of a code (verifying information), other arbitrary information can be used. For example, a parity code, a CRC (cyclic redundancy check) bit, etc. are added to check whether or not a code is destroyed. Hereinafter, a signature can be replaced with verifying information, and the organization for adding the information to a code is referred to as a code authentication organization.

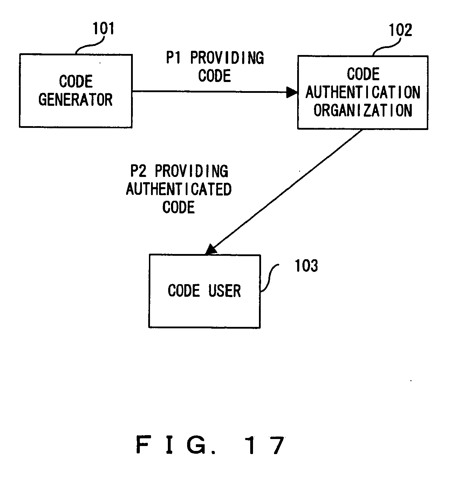

Next, a method for distributing a code provided with verifying information is described below by referring to FIGS. 17 through 22.

FIG. 17 shows a method for distributing a code to a user. In FIG. 17, a code generator 101 provides a code authentication organization 102 with a code (P1). The code authentication organization 102 adds verifying information after confirming the validity of the received code, and provides an authenticated code for a code user 103 (P2). The code user 103 has, for example, the above mentioned multiprocessor system, confirms the validity of the code according to the verifying information added to the received code, and then uses the code.

At this time, the code authentication organization 102 presents the fee to the code generator 101, collects a code, and pays the fee when the code is collected. Then, the code authentication organization 102 presents a code fee to the code user 103, adds the verifying information, provides the code for the code user 103, and simultaneously collects the fee.

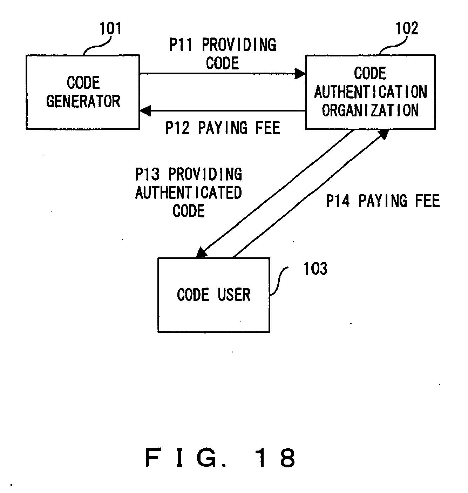

FIG. 18 shows such payment of fees. In FIG. 18, the code generator 101 provides a code for the code authentication organization 102 (P11), receives the fee from the code authentication organization 102 (P12). The code authentication organization 102 provides an authenticated code for the code user 103 (P13), and the code user 103 pays the fee to the code authentication organization 102 (P14).

The fees paid by the code user 103 and the code authentication organization 102 can be charged when the code is provided, or depending on the code use/provision state. In the latter case, for example, the fees are charged depending on an amount of the code received by the code user 103.

It is also possible that the code generator 101 pays a commission to the code authentication organization 102 to add the verifying information to a code and receives the fee paid by the code user 103.

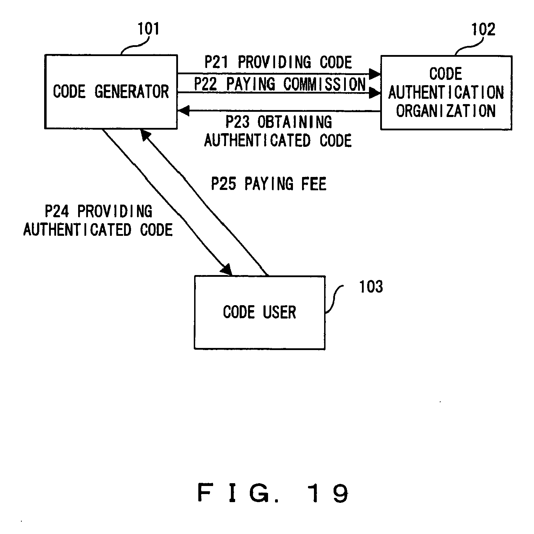

FIG. 19 shows such a method for distributing a code. In FIG. 19, the code generator 101 provides a code for the code authentication organization 102 (P21), pays a commission required to add the verifying information (P22), and obtains an authenticated code (P23). Then, the code generator 101 provides the authenticated code for the code user 103 (P24), and receives the fee (P25) .

The fee paid by the code user 103 can be charged at a time when a code is provided, or can be individually charged depending on the code use/provision state. Similarly, the commission paid by the code generator 101 can be charged collectively or individually.

Instead of the code generator 101, the code authentication organization 102 can distribute a code. In this case, the code authentication organization 102 provides an authenticated code for the code user 103 and collects the fee, and pays the collected fee to the code generator 101.

In the code distributing method shown in FIG. 17, it is possible that the code authentication organization 102 divides the received code into two or more divisions, first distributes a part of the divisions, and then distributes the rest of the divisions at a request of the code user 103. In this case, the first distribution is performed in any of the following methods.
(1) A code is broadcast to a plurality of users.
(2) A code is optionally downloaded by each user from the network.
(3) A code is stored in a portable storage medium, and the storage medium is distributed to the user.

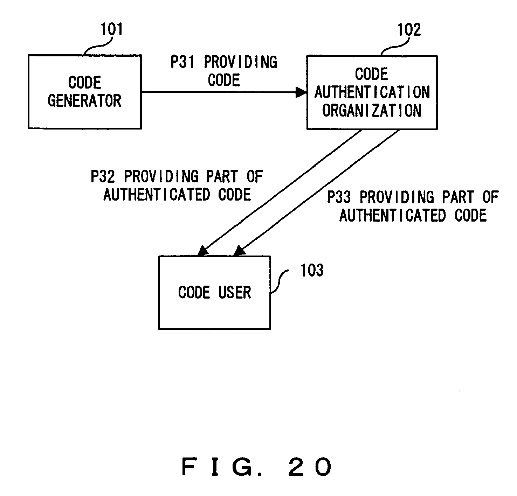

FIG. 20 shows such a code distributing method. In FIG. 20, the code generator 101 provides a code for the code authentication organization 102 (P31). The code authentication organization 102 confirms the validity of the code, adds verifying information to the code, and provides a part of the authenticated code for the code user 103 (P32). The code user 103, first confirms the validity of the part of the presented code according to the verifying information, and then uses the code. Furthermore, if necessary, The code user 103 obtains the rest of the authenticated code from the code authentication organization 102 and uses it (P33).

The code first provided is, for example, new year card generating software limited in printing function, game software recording only the first screen data, etc. The rest of the code is, for example, new year card generating software with all function restrictions removed, game software recording the second and subsequent screens, etc.

At this time, the code authentication organization 102 presents a fee to the code generator 101, collects the code, and pays the fee for the collection. Then, the code authentication organization 102 presents a code fee for the remaining part of the code to the code user 103, adds verifying information, provides the code, and simultaneously collects the fee.

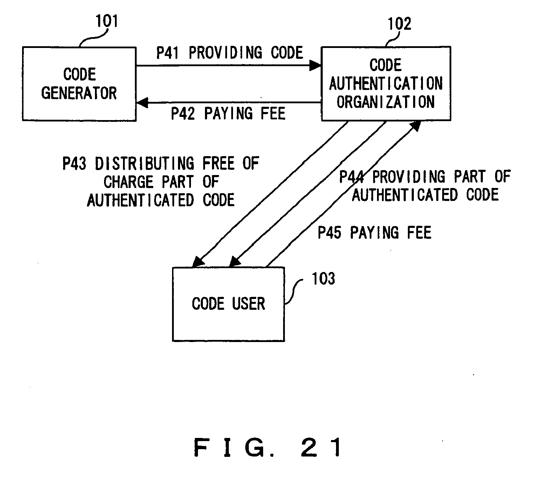

FIG. 21 shows such payment of fees. In FIG. 21, the processes of P41 and P42 are similar to the processes of P11 and P12 shown in FIG. 18. Then, the code authentication organization 102 distributes a part of the authenticated code free of charge through, for example, the CD-ROM (compact disk read only memory) as an attachment to a magazine, Internet, etc. (P43). If the code user 103 who has obtained and used it further requests to use the rest of the code, then the user pays the fee to the code authentication organization 102 (P45), and receives the rest of the code (P44).

As in FIG. 19, it is also possible to have a code provided with verifying information by paying a commission by the code generator 101 to the code authentication organization 102. In this case, the code generator 101 presents the fee for the rest of the code to the code user 103, provides the code to the code user 103, and simultaneously collects the fee.

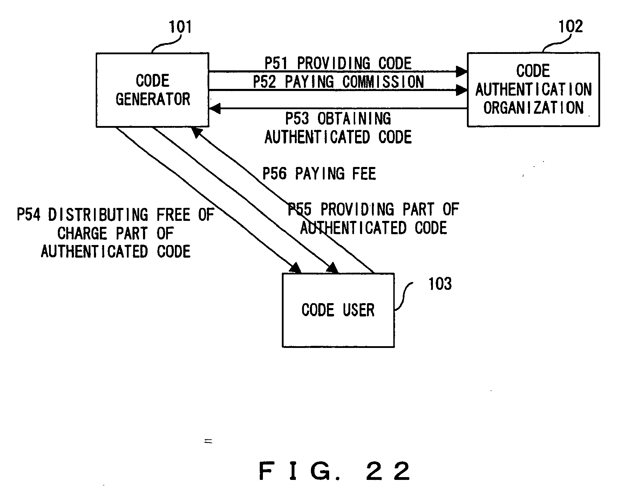

FIG. 22 shows such a code distributing method. In FIG. 22, the processes in P51, P52, and P53 are the same as the processes in P21, P22, and P23 shown in FIG. 19. The code generator 101 distributes free of charge a part of an authenticated code, for example, in the above mentioned method (P54). When the code user 103, who has obtained and used the part of the code, requests to use the rest of the code, the user pays the fee (P56), and obtains the rest of the code (P55).

Instead of the code generator 101, the code authentication organization 102 can distribute the code. In this case, the code authentication organization 102 can present the fee for the rest of the code to the code user 103, provides code for the code user 103 and simultaneously collects the fee, and pays the collected fee to the code generator 101.

According to the above mentioned code distributing methods, since a code authenticated by a code authentication organization is distributed, the user can safely use the code. Thus, the number of code users increases, and the codes can be widely distributed.

The secure OS 51 shown in FIG. 5 is, for example, stored in the secure drive/medium 25 in advance, and loaded into the memory as necessary to start the operation. It is also possible to externally store the secure OS 51, and then install it in the system as necessary.

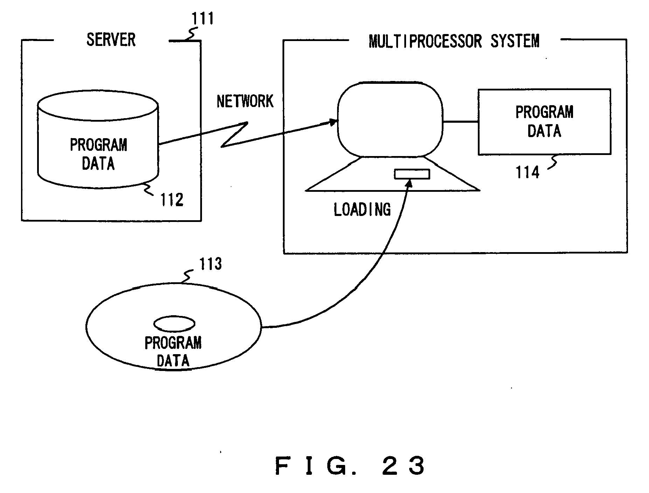

FIG. 23 shows computer-readable storage media capable of providing a multiprocessor system with a program including the secure OS 51 and data.

The program and data stored in a database 112 of a server 111 and a portable storage medium 113 are loaded into memory 114 of the multiprocessor system. At this time, the server 111 generates a propagation signal for propagating the program and data, and transmits the signal to the multiprocessor system through any transmission medium in the network. Then, the multiprocessor system executes the program using the data, and performs a necessary process.

The portable storage medium 113 can be any computer-readable storage medium such as a memory card, a floppy disk, CD-ROM, an optical disk, a magneto-optical disk, etc. The memory 114 corresponds to the normal memory 21 or the secure memory 23 shown in FIG. 2, the secure memory 91 shown in FIG. 12, or the shared memory 93 shown in FIG. 13.

According to the present invention, a heterogeneous multiprocessor system can be configured including a secure processor with a secure task and an unsecured task separately allocated, thereby realizing an easy control process by the OS, and efficiently performing a secure process. Furthermore, a code can be efficiently performed by attaching a signature for each part of a code read into a memory when the signature is attached to a code of a secure task.

## Claims

1. A code distributing method, comprising:
a code generator (101) providing executable code for a code authentication organization (102);
said code authentication organization adding to the code verifying information for verification of validity of the code, and distributing the code to a user (103) of a multiprocessor system; and
said multiprocessor system including a secure processor (12 and 24) for performing a secure task using the code, and a normal processor (14 and 22) for performing a normal task, allocating the secure task and the normal task, verifying the validity of the code according to the verifying information, and executing the code.

2. The method according to claim 1, wherein
said code authentication organization presents a fee to the code generator and collects the code, pays the fee when the code is collected, presenting a code fee to the user, adds the verifying information, provides the code for the user, and simultaneously collects the code fee.

3. The method according to claim 1 or 2, wherein
said code authentication organization divides the code into two or more divisions, first distributes a part, and then distributes the rest of the code to the user at a request of the user.

4. The method according to claim 3, wherein
said code authentication organization presents a fee to the code generator and collects the code, pays the fee when the code is collected, presents a code fee for the rest of the code to the user, adds verifying information, and provides the code and receives the code fee.

5. A code distributing method, comprising:
a code generator (101) providing executable code for a code authentication organization (102), and paying a commission;
said code authentication organization adding to the code verifying information for verification of validity of the code;
said code generator distributing the code to a user (103) of a multiprocessor system, and receiving a fee paid by the user; and
said multiprocessor system containing a secure processor (12 and 24) for performing a secure task using the code, and a normal processor (14 and 22) for performing a normal task, allocating the secure task and the normal task, verifying the validity of the code according to the verifying information, and executing the code.

6. The method according to claim 5, wherein
said code generator divides the code into two or more divisions, first distributes a part, then presents a fee for rest of the code at a request of the user, provides the code, and receives the fee.

7. A code execution apparatus using a multiprocessor system, comprising:
a secure memory (11, 23 and 91) storing encrypted code of a secure task and verifying information for verification of validity of the encrypted code;
a secure processor (12 and 24) executing the encrypted code when the validity of the encrypted code is verified according to the verifying information;
a normal memory (13 and 21) storing code of a normal task;
a normal processor (14 and 22) executing the code of the normal task; and
a controller (15 and 51) allocating the secure task and the normal task, and storing the encrypted code in the secure memory and the code of the normal task in the normal memory.

8. The apparatus according to claim 7, wherein
said secure memory stores the encrypted code in units of physical memory allocation, stores the verifying information for the encrypted code in the units, and verifies the encrypted code in the units according to the verifying information, and the secure processor fetches, decrypts, and executes an encrypted instruction included in an encrypted code whose validity has been verified.

9. The apparatus according to claim 7 or 8, wherein
said secure processor holds a plurality of decryption keys, and decrypts the encrypted instruction using a specified decryption key in the plurality of decryption keys.

10. The apparatus according to claim 8 or 9, wherein
said secure memory and said secure processor share a session key after mutual authentication, said secure memory further encrypts the encrypted instruction using the session key, and transfers the encrypted instruction to the secure processor.

11. The apparatus according to any of claims 7 to 10, further comprising
a secure drive (25) further encrypting the encrypted code using a unique key, and storing the encrypted code, wherein
said secure drive and said secure memory share a session key after mutual authentication, said secure drive decrypts the encrypted code using the unique key at a read instruction from said controller, encrypts the code using the session key, and transfers the code to said secure memory.

12. The apparatus according to any of claims 7 to 11, wherein
at least parts of said secure memory and said normal memory overlap each other.

13. The apparatus according to any of claims 7 to 12, wherein
said secure processor fixes at least a part of a logical circuit for executing an encrypted code in a circuit state in a non-volatile manner using the encrypted code.

14. The apparatus according to any of claims 7 to 13, wherein
said secure processor erases a previous circuit state of the logical circuit, and newly overwrites the state.

15. A memory (11, 23 and 91), comprising:
a device (34) storing encrypted code in units of physical memory allocation;
a device (33) storing verifying information for verification of validity of the encrypted code in the units; and
a device (32) verifying the encrypted code in the units according to the verifying information.

16. A processor (12 and 24), comprising:
a device (43) receiving from a memory (11, 23 and 91) storing encrypted code a notification that the encrypted code is valid;
a device (43) fetching and decrypting an encrypted instruction contained in the encrypted code when the notification is received; and
a device (44) executing a decrypted instruction.

17. A computer-readable storage medium (112, 113 and 114) recording a program for a computer, said program enabling the computer to perform;
allocating a secure task and a normal task in a multiprocessor system having a secure processor (12 and 24) for performing the secure task and a normal processor (14 and 22) for performing the normal task;
storing encrypted code of the secure task and verifying information for verification of validity of the encrypted code in a secure memory (11, 23 and 91); and
allowing the secure processor to execute the encrypted code when the validity of the encrypted code is verified according to the verifying information.

18. A propagation signal which propagates a program for a computer to the computer, said program enabling the computer to perform;
allocating a secure task and a normal task in a multiprocessor system having a secure processor (12 and 24) for performing the secure task and a normal processor (14 and 22) for performing the normal task;
storing encrypted code of the secure task and verifying information for verification of validity of the encrypted code in a secure memory (11, 23 and 91); and
allowing the secure processor to execute the encrypted code when the validity of the encrypted code is verified according to the verifying information.
